# EUROPÄISCHE PATENTSCHRIFT

(11) **EP 1 427 095 B1**
(45) Veröffentlichungstag und Bekanntmachung des Hinweises auf die Patenterteilung: **18.04.2007**
(21) Anmeldenummer: 03024789.4
(22) Anmeldetag: 30.10.2003
(51) Int. Cl.: H02P 6/14

(54) **Elektronisch kommutierter Elektromotor**
Electronically commutated electric motor
Moteur électrique à commutation électronique

(30) Priorität: 02.12.2002 DE 10256198; 25.02.2003 DE 10307874
(43) Veröffentlichungstag der Anmeldung: 09.06.2004
(73) Patentinhaber: ebm-papst St. Georgen GmbH & Co. KG, 78112 St. Georgen (DE)
(72) Erfinder: Hahn, Alexander, 78253 Eigeltingen-Heudorf (DE); Rappenecker, Hermann, 78147 Vöhrenbach (DE); Schmid, Harald, 78576 Emmingen (DE)
(74) Vertreter: Raible, Hans

(56) Entgegenhaltungen:
- EP-A- 0 613 234
- US-A- 5 936 376

## Beschreibung

Die Erfindung betrifft einen elektronisch kommutierten Elektromotor, der zur Energieversorgung aus einem Wechselstrom- oder Drehstromnetz ausgebildet ist und einen permanentmagnetischen Rotor sowie einen Stator mit wenigstens einer Wicklungsphase aufweist.

Bei derartigen Motoren wird der Strom, der durch die Wicklungsphasen fließt, elektronisch kommutiert. Hierzu wird die Winkelstellung des Rotors erfasst, z.B. mittels Hallgeneratoren. Aus der ermittelten Winkelstellung und ggf. anderen Werten (Drehzahl etc) bestimmt eine Kommutierungslogik die Zeitpunkte, zu denen die Wicklungsphasen bestromt werden müssen.

In diesem Zusammenhang ist es bekannt, in einer Endstufe der Motorelektronik jeder der Wicklungsphasen eine Brückenschaltung (Halb- oder Vollbrücke) vorzuschalten, in welcher von der Kommutierungslogik gesteuerte Halbleiter-Schaltelemente dafür sorgen, dass die betreffende Wicklungsphase zu den von der Kommutierungslogik bestimmten Zeiten - in der Regel - von Gleichstrom der richtigen Polarität durchflossen wird. Dieser Strom wird von einem sogenannten Gleichstrom-Zwischenkreis geliefert, an dem eine sogenannte Zwischenkreisspannung (dc link voltage) verfügbar ist. Diese Spannung wird gewöhnlich mit Hilfe eines Gleichrichters aus einer zugeführten Wechselspannung erzeugt, so dass man am Zwischenkreis eine pulsierende Gleichspannung erhält, zu deren Glättung man dort einen Kondensator verwendet. Von der Kapazität dieses Kondensators hängt es ab, wie hoch der Gleichspannungsanteil und wie hoch der Wechselanteil der Zwischenkreisspannung - und daraus resultierend des Wicklungsstromes - ist. Motoren dieses Typs sind jeweils in den Dokumenten WO 02054578, DE 3819064 und JP 4129594 beschrieben.

Problematisch bei solchen Elektromotoren ist insbesondere die Ansteuerung der Brückenschaltung durch die Kommutierungslogik, da die niedrigen Spannungswerte der von der Kommutierungslogik erzeugten logischen Pegel nicht ohne weiteres zum Schalten derjenigen Halbleiter-Schaltelemente verwendet werden können, mit denen ein Anschluss einer Wicklung an die pulsierende Gleichspannung am Zwischenkreis angeschlossen oder von ihr abgeschaltet wird.

Da die für die Beschaltung der Wicklungsphasen erforderliche Elektronik mit Gleichrichter, Kommutierungslogik und Endstufe oft innerhalb des Gehäuses des Elektromotors angeordnet sein soll, was man auch als "vollständig integrierter Elektronikmotor" bezeichnet, steht vor allem bei Motoren kleiner Baugröße nur sehr wenig Bauraum für die Elektronik zur Verfügung. Außerdem ist der Anteil der Elektronik an den Fertigungskosten des Elektronikmotors beträchtlich.

Aufgabe der Erfindung ist es daher, einen neuen Elektromotor bereit zu stellen.

Nach der Erfindung wird diese Aufgabe gelöst durch einen Elektromotor gemäß dem Gegenstand des Patentanspruchs 1 oder gemäß dem Gegenstand des Patentanspruchs 11. Da bei einem solchen Motor zur Stromversorgung der wenigstens einen Wicklungsphase auf der positiven Seite ein Schaltelement verwendet wird, das mit einer Steuerspannung schaltbar ist, welche kleiner als die zu schaltende Spannung ist, und da andererseits durch die Hilfsschaltung die Steuerspannung der zu schaltenden, welligen Gleichspannung "nachgeführt" wird, ist sichergestellt, dass auch bei einer sehr welligen, also stark pulsierenden Gleichspannung dieses Schaltelement zuverlässig gesteuert wird.

Dies erlaubt es, eine pulsierende Gleichspannung mit großer Welligkeit als Betriebsspannung zu verwenden und somit eine einfach aufgebaute und damit preisgünstige Schaltung für die Erzeugung der Zwischenkreisspannung und für die Stromversorgung der Elektronik des Motors zu verwenden. Dadurch kann man am Zwischenkreis einen relativ kleinen Kondensator verwenden. Seine Aufgabe ist weniger die, die Welligkeit der Gleichspannung am Zwischenkreis zu verringern als vielmehr, die bei der Kommutierung aus den Wicklungen des Motors zurückgespeiste Energie aufzunehmen. Diese Energie könnte sonst die Halbleiter-Schaltelemente der Brückenschaltung zerstören.

Auf diese Weise kann man einen solchen Motor direkt am Wechselstromnetz betreiben, z.B. in einem Staubsauger oder dergleichen, wobei der Motor eine sogenannte vollständig integrierte Elektronik aufweisen kann, die naturgemäß auch Schaltelemente für die Kommutierung auf der negativen Seite aufweist.

Die Steuerspannung kann überdies durch eine einzige Hilfsschaltung gemeinsam für mehrere Schaltelemente einer verwendeten Brückenschaltung erzeugt werden. Dies spart Platz im Motor und ist besonders preiswert.

Selbstverständlich ist diese Art der Beschaltung auch dann vorteilhaft, wenn aus welchen Gründen immer dennoch eine geregelte Zwischenkreisspannung oder eine Zwischenkreisspannung mit reduzierter Welligkeit verwendet wird.

Bei dem Schaltelement auf der positiven Seite der Brückenschaltung kann es sich um einen pnp-Transistor, einen PIGPT oder einen HEXFET handeln. Vorzugsweise jedoch ist das Schaltelement ein p-Kanal-MOSFET, dessen Source-Elektrode mit der positiven Leitung des Gleichstrom-Zwischenkreises verbunden ist und auf dessen Gate-Elektrode die Steuerspannung zum Steuern des p-Kanal-MOSFET aufschaltbar ist. Derartige MOSFETs haben gegenüber den anderen genannten Schaltelementen den Vorteil, dass sie eine nahezu leistungslose Ansteuerung ermöglichen, dass sie preiswerter als andere Schaltelemente sind, bzw. dass sie in kleineren Gehäusen verfügbar sind und deshalb eine kompaktere Bauweise ermöglichen.

Die Hilfsschaltung für die Erzeugung der Steuerspannung kann beispielsweise mit Hilfe von Operationsverstärkern oder ähnlichen Bauelementen realisiert werden, mit denen sich eine derartige Spannungsnachführung sehr genau erzielen lässt. Eine besonders einfache Ausführung ergibt sich durch den Gegenstand des Patentanspruchs 3. Die Steuerspannung entsteht dann an diesem Kondensator, wobei eine seiner Elektroden mit jeder negativen Halbwelle der Wechselspannung negativ gegenüber dem an der anderen Elektrode liegenden Potenzial nachgeladen wird. Somit liegt das Potenzial an der einen Elektrode stets unter demjenigen an der anderen Elektrode. Dabei kann mit Vorteil parallel zum Kondensator ein Spannungsbegrenzer, insbesondere eine Zenerdiode, geschaltet sein, der die Spannung am Kondensator auf eine vorgegebene Differenzspannung begrenzt. Auf diese Weise wird die Steuerspannung besonders genau der pulsierenden Gleichspannung am Zwischenkreis nachgeführt.

Da durch die Lade- und Entladevorgänge des zwischen die Wechselspannungsquelle und den Gleichstrom-Zwischenkreis geschalteten Kondensators eine Welligkeit der Differenzspannung nicht ganz zu vermeiden ist, kann außerdem eine zweite Hilfsschaltung parallel zur ersten geschaltet werden, welche zweite Hilfsschaltung an den anderen Anschluss der Wechselspannungsquelle angeschlossen wird. Auf diese Weise erhält man eine Steuerspannung mit verdoppelter Frequenz, und dadurch steht am Ausgang der Hilfsspannungsquelle mehr elektrische Ladung, also mehr Strom, zur Verfügung.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den übrigen Unteransprüchen. Darin zeigen:
- Fig. 1: ein Blockschaltbild zur Erläuterung von Komponenten eines erfindungsgemäßen elektronisch kommutierten Motors (ECM),
- Fig. 2: ein Schaltbild für einen Teil der Endstufe eines erfindungsgemäßen ECM,
- Fig. 3: den zeitlichen Verlauf einer zur Speisung des ECM verwendeten Wechselspannung, einer daraus von einem Gleichrichter erzeugten pulsierenden Gleichspannung, und einer von einer Hilfsschaltung erzeugten Steuerspannung,
- Fig. 4: ein Schaltbild eines Gleichrichters und einer einstufigen Hilfsschaltung zur Erzeugung einer Steuerspannung für die Steuerung der p-Kanal-Schaltelemente der verwendeten Endstufe,
- Fig. 5: ein Schaltbild einer zweistufigen Hilfsschaltung zur Erzeugung einer Steuerspannung für die Steuerung der p-Kanal-Schaltelemente der verwendeten Endstufe,
- Fig. 6: ein Prinzipschaltbild einer Brückenschaltung für einen dreiphasigen ECM, welche aus drei Halbbrücken gebildet ist,
- Fig. 7: ein Oszillogramm, welches für den Leerlauf des Motors die Betriebsspannung U_{B} und die um etwa 18 V niedrigere Steuerspannung U_{ST} zeigt; in diesem Oszillogramm ist ein Unterschied zwischen den beiden Spannungen nicht zu erkennen,
- Fig. 8: eine Ausschnittsvergrößerung etwa entsprechend dem Abschnitt A der Fig. 7; hier ist die konstante Spanungsdifferenz zwischen den beiden Spannungen gut zu erkennen,
- Fig. 9: ein Oszillogramm analog Fig. 7, aber bei belastetem Motor, wodurch die Welligkeit der beiden Spannungen entsprechend zunimmt,
- Fig. 10: eine Ausschnittsvergrößerung etwa entsprechend dem Abschnitt B der Fig. 9, analog Fig. 7,
- Fig. 11: eine bevorzugte Schaltung eines Störschutzfilters, wie es in der Zuleitung vom Hausgerätenetz zu einem erfindungsgemäßen Motor verwendet werden kann, z.B. als Teil des Zuleitungskabels, und
- Fig. 12: eine Prinzipdarstellung einer stromkompensierten Drossel, wie sie bevorzugt im Störschutzfilter der Fig. 11 verwendet wird.

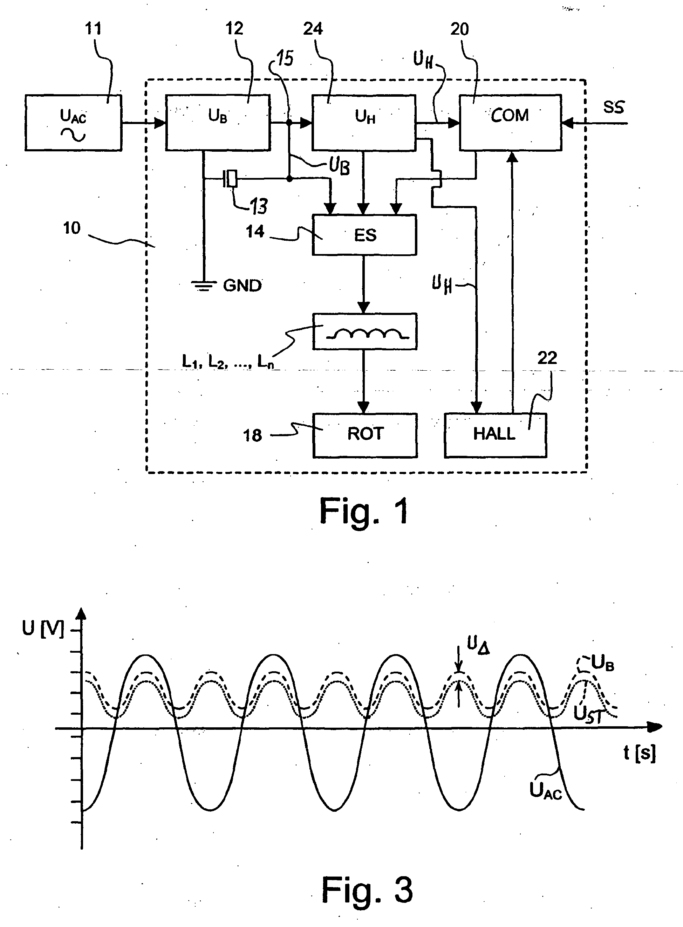

In **Fig. 1** sind Teile eines mit 10 bezeichneten erfindungsgemäßen elektronisch kommutierten Motors (ECM) in Form eines Blockschaltbilds dargestellt. Der Motor 10 erhält seine Energie von einer Wechselspannung U_{AC}, welche von einer externen Wechselspannungsquelle 11 bereit gestellt wird. Bei der Spannungsquelle 11 kann es sich beispielsweise um das einphasige Niederspannungsnetz (230 V) handeln, also das sogenannte Haushaltnetz.

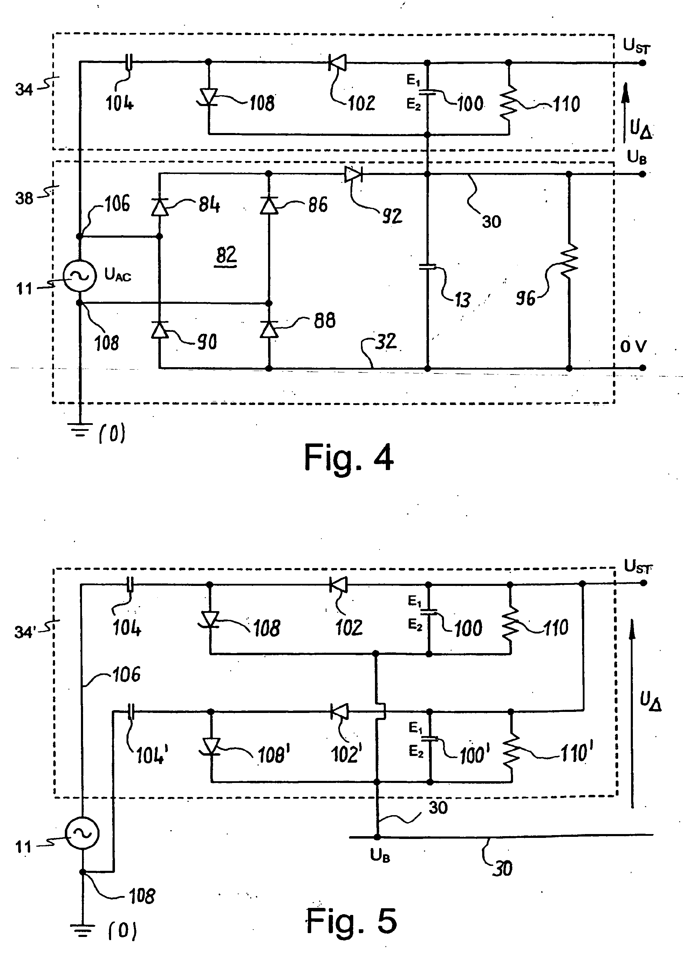

Der Motor 10 hat eine Betriebsspannungsversorgung 12, die aus der Wechselspannung U_{AC} eine im folgenden als Betriebsspannung U_{B} bezeichnete pulsierende Zwischenkreisspannung an einem Gleichstrom-Zwischenkreis 15 erzeugt. Hierzu dienen eine in Fig. 4 dargestellter Gleichrichter 82 und ein Zwischenkreiskondensator 13. Letzterer ist aus Platz- und Kostengründen gewöhnlich klein ausgeführt, so dass die Betriebsspannung U_{B} eine pulsierende Gleichspannung mit relativ großem Wechselanteil ist.

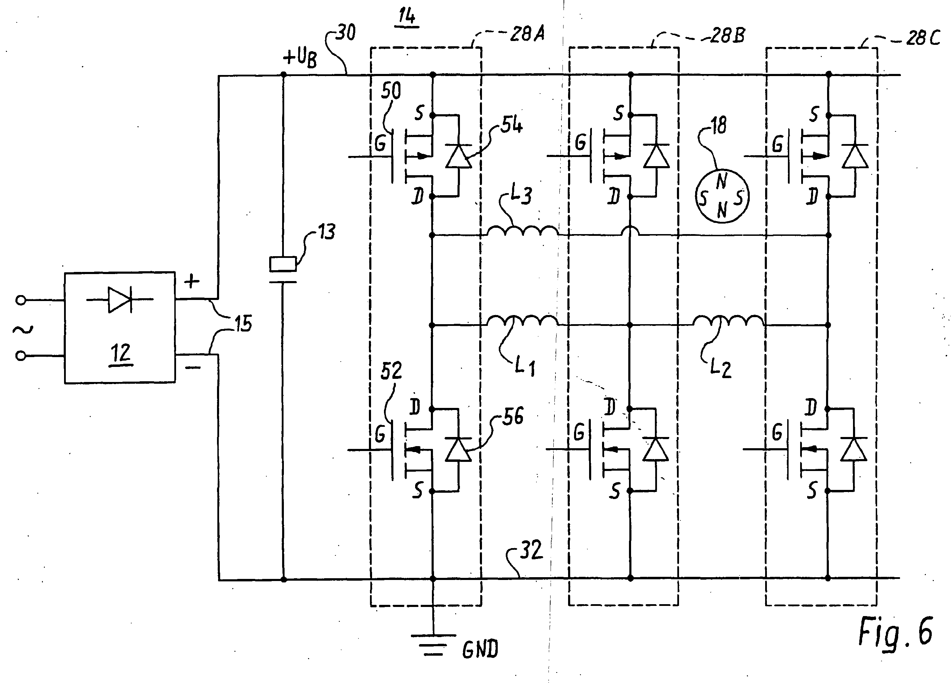

Die Betriebsspannungsversorgung 12 ist mit einer Endstufe 14 verbunden, die n Wicklungsphasen L1, L2 ... des Elektromotors speist. Durch kommutiertes Beaufschlagen der Wicklungsphasen L1, L2, ... mit der pulsierenden Betriebsspannung U_{B} kann im Motor 10 in bekannter Weise ein umlaufendes Drehfeld erzeugt werden, das einen Rotor 18 in Drehung versetzt. Letzterer ist meist ein permanentmagnetischer Rotor mit m magnetischen Polen, wie in Fig. 6 an einem Beispiel schematisch dargestellt. Der Motor 10 kann ein Motor mit zylindrischem Luftspalt, flachem Luftspalt, konischem Luftspalt etc sein, ebenso ein Linearmotor, ein "eisenloser" Motor, etc., wie das dem Fachmann geläufig ist.

Zur Erzeugung des Drehfelds werden die Wicklungsphasen L1, L2, ... elektronisch kommutiert. Hierzu hat der Motor 10 eine mit COM bezeichnete Kommutierungslogik 20, der, z.B. von Sensoren 22, Informationen über die augenblickliche Drehstellung des Rotors 18 zugeführt werden. Bei den Sensoren 22 kann es sich um Hallgeneratoren handeln, welche die räumliche Lage des Rotors 18 erfassen und in elektrische Signale umwandeln. Ferner verarbeitet die Kommutierungslogik 20 Steuersignale SS, die von einer übergeordneten Steuer- oder Regeleinrichtung für den Motor 10 erzeugt werden, um beispielsweise ein Ein- oder Ausschalten des Elektromotors 10 oder eine Drehzahländerung desselben zu bewirken. Auch kann die übergeordnete Einrichtung einen sogenannten Blockierschutz bewirken, durch den der Strom abgeschaltet wird, wenn der Rotor 18 an einer Drehung gehindert ist. Die Kommutierungslogik 20 bestimmt aus den von den Sensoren 22 erzeugten Signalen und den extern vorgegebenen Steuersignalen SS die Zeitpunkte, an denen die Kommutierung der Wicklungsphasen L1, L2, etc. erfolgen soll.

Da die Kommutierungslogik 20 nicht mit der (gewöhnlich sehr hohen) Zwischenkreisspannung U_{B} arbeiten kann, hat der Motor 10 zusätzlich eine mit U_{H} bezeichnete Hilfsspannungsversorgung 24, welche aus der Betriebsspannung U_{B} am Zwischenkreis 15, oder direkt aus der zugeführten Netzspannung U_{AC}, eine niedrige Hilfsspannung für Logikbausteine, z.B. 5 V oder 12 V, erzeugt. Die Hilfsspannungsversorgung 24 kann bevorzugt als Schaltnetzteil von der Art ausgebildet sein, wie sie aus der EP 0 854 562 B bekannt und deshalb nicht dargestellt wird. Die von der Hilfsspannungsversorgung 24 bereitgestellte Hilfsspannung UH wird auch der Endstufe 14 sowie den Sensoren 22 zur Verfügung gestellt.

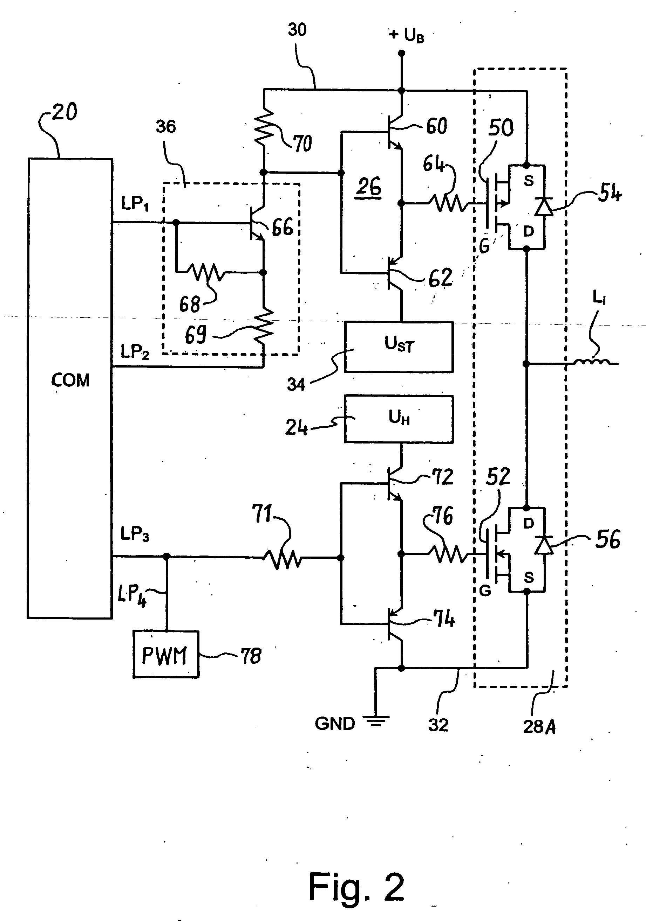

**Fig. 2** zeigt ein Schaltbild für einen Teil 28A der Endstufe 14 des Elektromotors 10 und zu seiner Steuerung dienende Teile. Der Teil 28A ist einer Wicklungsphase L1 zugeordnet. Er ist ein Teil der Brückenschaltung 14, wie sie in **Fig. 6** schematisch dargestellt ist und noch zwei weitere Teile 28B und 28C enthält, die mit dem Brückenteil 28A identisch sind. Der Rotor 18 ist in Fig. 6 schematisch als vierpoliger permanentmagnetischer Rotor dargestellt. Fig. 6 zeigt die Wicklung L1, L2, L3 als Dreieckschaltung, doch wäre genauso eine Sternschaltung möglich. Ebenso sind andere Phasenzahlen möglich, z.B. eine H-Brücke mit nur einer Wicklungsphase. In diesem Fall würden in Fig. 6 die beiden Wicklungsphasen L2, L3 und der Teil 28C entfallen.

Die in Fig. 2 dargestellten Schaltungen, welche dem Teil 28A der Endstufe 14 zugeordnet sind, sind Bestandteil der Kommutierungslogik und haben u.a. die Aufgabe, mit den von der Kommutierungslogik COM 20 erzeugten niedrigen Logikpegeln, die z.B. die Höhe der Hilfsspannung U_{H} haben können, die hohe pulsierende Gleichspannung U_{B} zu schalten, also die Steuerinformation von der Seite mit niedriger Spannung auf die Seite mit hoher Spannung weiter zu geben. In Fig. 2 erzeugt die Kommutierungslogik COM 20 mehrere Logikpegel, von denen nur drei Logikpegel LP1, LP2 und LP3 dargestellt sind. Der Logikpegel LP1 steuert die Verbindung der positiven Leitung 30 mit der Wicklungsphase L1, und der Logikpegel LP3 die Verbindung der motorinternen Masse GND (Leitung 32) mit der Wicklungsphase L1. Ein Logikpegel LP4 von einem PWM-Geber 78 dient dazu, dann, wenn die Wicklungsphase L1 über den MOSFET 52 an den Zwischenkreis 15 angeschlossen ist, diesen mit einem vorgegebenen Tastverhältnis ständig ein- und auszuschalten, z.B. 20.000 Mal in der Sekunde, um die Leistungsaufnahme des Motors 10 zu steuern. Hierbei werden in Fig. 6 alle unteren Brückentransistoren 52 mit dem gewünschten Tastverhältnis pwm ein- und ausgeschaltet.

Die Schaltung nach Fig. 2 hat zum Ansteuern des linken Anschlusses der Wicklungsphase L1 einen p-Kanal-MOSFET 50 sowie einen n-Kanal-MOSFET 52, zu denen jeweils Freilaufdioden 54 bzw. 56 antiparallel geschaltet sind. Diese sind gewöhnlich in das Gehäuse des MOSFETs integriert. Der p-Kanal-MOSFET ist mit seiner Source-Elektrode S an die positive Leitung 30 des Gleichstrom-Zwischenkreises 15 angeschlossen, der von dem Gleichrichter 12 gespeist wird. Die negative Leitung 32 des Gleichstrom-Zwischenkreises ist die motorinterne Masse GND. Jeder der beiden MOSFETs 50, 52 führt im leitenden Zustand Ströme zwischen seiner Source-Elektrode S und seiner Dräin-Elektrode D.

Das Schalten des p-Kanal-MOSFETs 50 erfolgt über dessen Gate G. Er ist gesperrt, wenn das Potenzial an seinem Gate annähernd so hoch ist wie das Potenzial an seiner Source S. Leitend wird er, wenn an seinem Gate ein Potenzial anliegt, das gegenüber dem an der Source anliegenden Potenzial U_{B} um ca. 10 bis 20 V kleiner ist. Um ein zuverlässiges Schalten zu ermöglichen, darf diese Potenzialdifferenz nicht zu gering sein. Wird sie andererseits zu hoch, so kann es zu Beschädigungen des p-Kanal-MOSFETs 50 kommen. Wegen dieser Eigenschaften des p-Kanal-MOSFET 50 ist es nicht möglich, einerseits einen preisgünstige Gleichrichter 12 für die Betriebsspannungsversorgung zu verwenden, und andererseits zum Einschalten des p-Kanal-MOSFET 50 dessen Gate an ein festes Potenzial zu legen. Wegen der starken Welligkeit der pulsierenden Gleichspannung U_{B} könnte die zulässige Potenzialdifferenz zwischen Source und Gate zu groß werden.

Zum Einschalten des p-Kanal-MOSFET 50 wird deshalb an dessen Gate eine Steuerspannung U_{ST} angelegt, die unabhängig von dem Augenblickswert der pulsierenden Gleichspannung U_{B} um eine vorgegebene Differenzspannung U_{Δ} kleiner ist als diese pulsierende Gleichspannung U_{B}. Diese Spannung hat also (phasengleich) die gleiche Welligkeit wie die pulsierende Gleichspannung U_{B} und wird somit mit dieser "mitgeführt". Erzeugt wird die Steuerspannung U_{ST} in einer Hilfsschaltung 34, deren Aufbau bei Fig. 4 und 5 näher erläutert wird. Vorteilhaft ist hierbei, dass die Hilfsschaltung 34 nur einmal für den gesamten Elektromotor 10 vorhanden sein muss, und nicht etwa n-fach, also nicht in einer der Zahl der Wicklungsphasen L1, L2, ..., Ln entsprechenden Anzahl. Naturgemäß ist es auch nicht ausgeschlossen, eine Mehrzahl solcher Hilfsschaltungen 34 zu verwenden, falls das gewünscht wird.

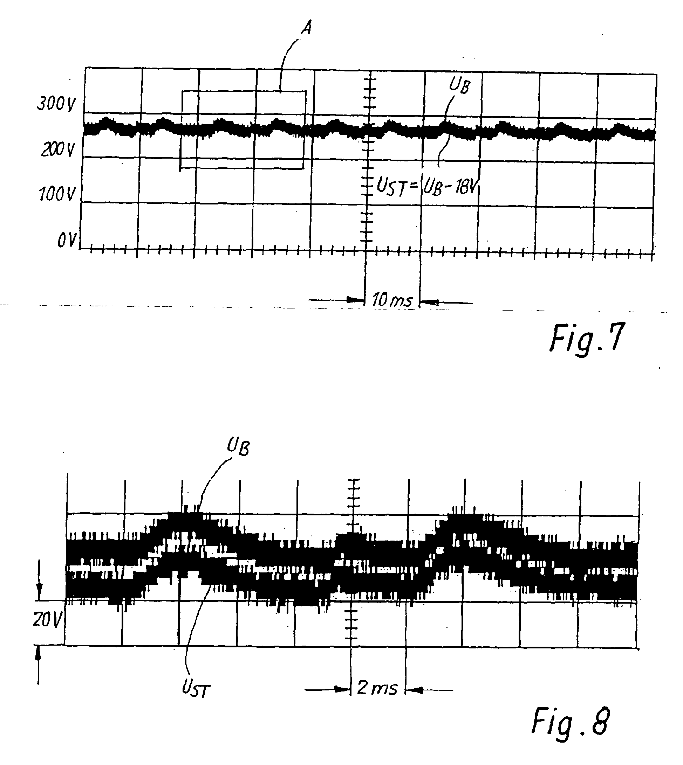

**Fig. 3** zeigt in einer idealisierten Darstellung einen möglichen zeitlichen Verlauf der an der Wechselspannungsquelle 12 abgreifbaren Wechselspannung U_{AC} (mit einer durchgehenden Linie gezeichnet), der pulsierendenGleichspannung U_{B} (gestrichelt) und der von der Hilfsschaltung 42 erzeugten Steuerspannung U_{ST} (gepunktet). Die Differenzspannung zwischen der Betriebsspannung U_{B} und der Steuerspannung U_{ST} ist mit U_{Δ} bezeichnet und kann z.B. -18 V betragen. Da die pulsierende Gleichspannung U_{B} typisch Amplituden in der Größenordnung von 300 bis 400 V hat, ist die Differenzspannung U_{Δ} in Fig. 3 stark übertrieben dargestellt. Die Fig. 7 bis 10 zeigen Oszillogramme, welche den tatsächlichen Verlauf bei einem Ausführungsbeispiel zeigen.

Um die Betriebsspannung U_{B} und die Steuerspannung U_{ST} in einem von der Kommutierungslogik 20 gesteuerten Wechsel an das Gate G des p-Kanal-MOSFET 50 anlegen zu können, sind in der Schaltung 26 ein npn-Transistor 60 und ein pnp-Transistor 62 in Emitterfolgerschaltung vorgesehen. Hierbei liegen einerseits die Emitter der Transistoren 60 und 62 praktisch auf demselben Potenzial wie das Gate G des p-Kanal-MOSFET 50. Außerdem liegen auch die Basen beider Transistoren 60, 62 auf demselben Potenzial. Da sich aber die an den Kollektoren der beiden Transistoren 60, 62 anliegenden Potenziale, nämlich U_{B} und U_{ST}, unterscheiden, können die beiden Transistoren 60, 62 gemeinsam derart gesteuert werden, dass stets einer von ihnen leitend ist, während der andere sperrt. Liegt z.B. an den Basen der Transistoren 60, 62 annähernd die Betriebsspannung U_{B} an, so ist der npn-Transistor 60 leitend, während der pnp-Transistor 62 sperrt, da diese Spannung höher ist als die an seinem Kollektor anliegende Steuerspannung U_{ST}. Der npn-Transistor 60 schaltet dann die Betriebsspannung U_{B} auf das Gate G des p-Kanal-MOSFET 50, wodurch dieser nichtleitend wird.

Liegt hingegen an den Basen der beiden Transistoren 60, 62 eine etwas niedrigere Spannung als die Steuerspannung U_{ST}, so sperrte der npn-Transistor 60, während jetzt der pnp-Transistor 62 leitend wird, da jetzt an seiner Basis eine höhere Spannung als an seinem Kollektor liegt. Der pnp-Transistor 62 schaltet dann über einen Widerstand 64 die Steuerspannung U_{ST} auf das Gate G des p-Kanal-MOSFET 50, wodurch dieser niederohmig, also leitend wird.

Um das an den Basen der Transistoren 60, 62 anliegende Potenzial zu steuern, verwendet die Schaltung gemäß Fig. 2 eine schaltbare Konstantstromquelle 36, welche einen Teil der Kommutierungslogik COM 20 darstellt und einen spannungsfesten npn-Transistor 66 und drei Widerstände 68, 69 und 70 aufweist. Abhängig von den Logikpegeln LP1 und LP2, welche von der Kommutierungslogik COM 20 erzeugt werden, ist es so, dass der Transistor 66 entweder sperrt, oder dass ein durch ihn fließender Emitterstrom konstant auf einem durch die Schaltung 36 vorgegebenen Wert gehalten wird.

Wenn der Transistor 66 sperrt, liegt an den Basen der beiden Transistoren 60, 62 die pulsierende Gleichspannung U_{B} an, was, wie oben erläutert, zum Sperren des p-Kanal-MOSFET 50 führt. Wirkt die Schaltung 36 dagegen als Konstantstromquelle, so kommt es auf Grund des fest vorgegebenen Emitterstroms zu einem ebenfalls fest vorgegebenen Spannungsabfall am Widerstand 70, welcher zwischen die Leitung 30 und den Kollektor des Transistors 66 geschaltet ist, welcher Kollektor mit den Basen der beiden Transistoren 60 und 62 verbunden ist. Dementsprechend liegt dann an den Basen der Transistoren 60, 62 nicht mehr die Betriebsspannung U_{B}, sondern eine um den (konstanten) Spannungsabfall am Widerstand 70 reduzierte Spannung, wodurch der npn-Transistor 60 gesperrt, und der pnp-Transistor 62 leitend gesteuert wird. Dies führt, wie oben erläutert, dazu, dass der p-Kanal-MOSFET 50 niederohmig, also leitend, gesteuert wird.

Der n-Kanal-MOSFET 52 wird von einem Logikpegel LP3 gesteuert, und zwar über eine (nicht dargestellte) Transistorschaltung. Der Logikpegel LP3 entsteht durch logische Verknüpfung der Signale von zwei Hallgeneratoren mittels eines (nicht dargestellten) Verknüpfungsgliedes. Da die Source des MOSFET 52 auf dem Potenzial der motorinternen Masse GND liegt, genügt zur Ansteuerung über das Gate G eine Hilfsspannung U_{H} in der Größenordnung von einigen Volt gegenüber der motorinternen Masse, die von der Hilfsspannungsquelle 24 (Fig. 1) erzeugt wird.

Zur Ansteuerung des n-Kanal-MOSFET 52 dient eine Schaltung mit einem npn-Transistor 72 und einem pnp-Transistor 74. Die Emitter beider Transistoren sind über einen Widerstand 76 mit dem Gate des MOSFET 52 verbunden. Die Basen beider Transistoren 72, 74 sind miteinander, und über einen Widerstand 71 mit einem Logikpegel LP3 und mit dem PWM-Geber 78 verbunden, der den Logikpegel LP4 erzeugt. Der Kollektor des Transistors 72 ist mit der Hilfsspannungsquelle 24 verbunden, der Kollektor des Transistors 74 mit der motorinternen Masse GND. Das Signal LP3 wird in der Kommutierungslogik 20 aus den Ausgangssignalen von zwei Hallgeneratoren 22 (Fig. 1) gebildet und wird zusätzlich mit dem Logikpegel LP4 (PWM-Signal vom Geber 78) logisch verknüpft. Die beiden Transistoren 50 und 52 werden so gesteuert, dass sie niemals gleichzeitig leitend sein können und dass, wenn z.B. der zuvor leitende Transistor 50 gesperrt und der zuvor gesperrte Transistor 52 leitend wird, während des Umschaltvorgangs eine entsprechende Pause erzeugt wird.

Aufgrund der niedrigen Spannungen können die Logikpegel LP3 und LP4 die Basen der beiden Transistoren 72, 74 direkt steuern, d.h. ohne Zwischenschaltung einer Konstantstromquelle, doch kann in manchen Fällen eine solche Konstantstromquelle erforderlich sein.

### Bevorzugte Bauelemente für Fig. 2

| (k = kΩ) | |
|---|---|
| MOSFET 50 (p-Kanal) | ...FQD3P50 oder FGD1P50 |
| MOSFET 52 (n-Kanal) | ...IRFR430B |
| Transistoren 60, 62, 72, 74 | ...BC847BPNSOT363 |
| Transistor 66 | ...FMMT459 |
| Widerstände 64, 76 | ...0 Ω |
| Widerstand 68 | ...27 k |
| Widerstand 69 | ...120 k |
| Widerstand 70 | ...240 k |
| Widerstand 71 | ...47 k |

Nachfolgend wird die zur Erzeugung der Steuerspannung U_{ST} für das Gate G des p-Kanal-MOSFETs 50 vorgesehene Hilfsschaltung 34 anhand der Fig. 4 und 5 näher erläutert.

**Fig. 4** zeigt einen Brückengleichrichter 82 und eine erste Ausführungsform für eine geeignete Hilfsschaltung 34. Bei dem Gleichrichter 82 handelt es sich um einen Vollweggleichrichter, der aus vier mit der Wechselspannungsquelle 11 verbundenen Dioden 84, 86, 88, 90 aufgebaut ist, welche über eine Diode 92 den relativ kleinen Kondensator 13 speisen. (Die Diode 92 ist nicht unbedingt erforderlich und kann in manchen Fällen entfallen.) Da beim vorliegenden Ausführungsbeispiel auf einen gesonderten Regler zum Regeln der Spannung am Kondensator 13 verzichtet wird, erzeugt der Gleichrichter 82 eine stark pulsierende Gleichspannung U_{B}, wie in Fig. 3 dargestellt. Parallel zum Kondensator 13 ist ein hochohmiger Widerstand 96 geschaltet, der zur Vermeidung von kritischen Spannungszuständen (Spannungsspitzen) dient. Der Kondensator 13 liegt zwischen der positiven Leitung 30 und der negativen Leitung 32, welch letztere mit der motorinternen Masse GD verbunden ist. Die Leitungen 30, 32 bilden den in Fig. 1 bei 15 angedeuteten Gleichstrom-Zwischenkreis.

Die Hilfsschaltung 34 ist ähnlich wie eine Ladungspumpe aufgebaut.Die um die Differenzspannung U_{Δ} reduzierte Steuerspannung U_{ST} entsteht an einem Kondensator 100. Die in Fig. 4 untere Elektrode E2 des Kondensators 100 ist mit der Leitung 30 verbunden, an der die pulsierende Gleichspannung U_{B} liegt. Die andere Elektrode E1 ist mit der Anode einer Diode 102 verbunden, deren Kathode über einen Knotenpunkt 103 und einen - zur Strombegrenzung dienenden - Serienkondensator 104 mit dem einen Anschluss 106 der Wechselspannungsquelle 11 verbunden ist, deren anderer Anschluss 108 wie dargestellt mit dem Nullleiter des Wechselstromnetzes verbunden sein kann.

Zwischen dem Knotenpunkt 103 und der Leitung 30 liegt eine Z-Diode 108, welche die Spannung am Kondensator 100 z.B. auf 18 V begrenzt. Parallel zum Kondensator 100 liegt ein Widerstand 110, dessen Funktion es ist, Oszillationen der Spannung am Kondensator 110 zu unterdrücken.

### Bevorzugte Werte der Bauelemente in Fig. 4

| | |
|---|---|
| Wechselspannung U_{AC} | ...230 V, 50 Hz |
| Dioden 84, 86, 88, 90, 92 | ...D1 N4007 |
| Kondensator 13 | ...4,7 µF |
| Widerstand 96 | ...500 Ω |
| Kondensator 100 | ...470 nF, 25 V |
| Widerstand 110 | ...1 MΩ |
| Diode 102 | ...1SS380 |
| Z-Diode 108 | ...BZX84C18/ZTX |
| Kondensator 104 | ...4,7 nF |

### Arbeitsweise von Fig. 4

Bei der Schaltung nach Fig. 4 wird nur die negative Halbwelle der Sinusspannung U_{AC} zur Erzeugung einer Steuerspannung U_{ST} von z.B. 18 V am Kondensator 100 verwendet. Hierdurch erhält die obere Elektrode E1 des Kondensators 100 ein Potenzial, das um 18 V negativer ist als das Potenzial an der unteren Elektrode E2, welche ihrerseits am pulsierenden Potenzial U_{B} liegt. Deshalb bezieht sich die Differenzspannung auf das pulsierende Potenzial U_{B} am Zwischenkreis. Bei dieser negativen Aufladung begrenzt der Serienkondensator 104 den Ladestrom. Die Diode 102 verhindert, dass während der positiven Halbwelle der Sinusspannung U_{AC} der Kondensator 100 gegen das Potenzial + U_{B} positiv geladen wird. Die Zenerdiode 108 begrenzt die Spannung am Kondensator 100 auf den gewünschten Wert von 18 V.

In der Schaltung wirkt also der Kondensator 100, dessen Spannung ständig auf etwa 18 V gehalten wird, als Speicher, der die obere Elektrode E1 des Kondensators 100 ständig auf einem Potenzial hält, das um eine Differenzspannung U_{Δ} von 18 V negativer ist als die - stark pulsierende - Gleichspannung U_{B}.

Da gemäß Fig. 2 die Source S des MOSFET 50 ständig an +U_{B} liegt, erhält das Gate G des MOSFET 50 dann, wenn der Transistor 62 leitend und der Transistor 60 gesperrt ist, ein Potenzial, das um 18 V negativer ist als das Potenzial an der Source S, so dass der MOSFET 50 in diesem Fall - unabhängig von der augenblicklichen Größe von U_{B} - ständig leitend wird.

Da das Gate G des p-Kanal-MOSFET 50 eine niedrige Kapazität hat, fließen bei dieser Schaltung nur geringe Ströme. Die Schaltung gemäß Fig. 2 dient z.B. bei einem Motor 10 mit drei Wicklungsphasen L1, L2, L3 und einer Vollbrückenschaltung 14 mit drei p-Kanal-MOSFETs und drei n-Kanal-MOSFETs dazu, alle drei p-Kanal-MOSFETs mit der nötigen Steuerspannung U_{ST} von 18 V zu deren Einschaltung zu versorgen. Für den Kondensator 100 kann ein kleiner handelsüblicher Kondensator mit einer Spannungsfestigkeit verwendet werden, die z.B. 25 V beträgt. Bei einer solchen Brückenschaltung hat also jedes der Schaltelemente 28A, 28B und 28C zur Ansteuerung der p-Kanal-MOSFETs 50 Schaltungen 26, 36, die von entsprechenden Logikpegeln der Schaltung 20 gesteuert werden, wie das dem Fachmann des Elektromaschinenbaus geläufig ist.

Der zum Kondensator 100 parallel geschaltete Widerstand 110 bewirkt, dass aus der Schaltung ständig ein definierter Strom fließt. Da diese Schaltung mit geringen Strömen arbeitet und wenig Strom aus ihr entnommen wird, vermeidet dieser Widerstand Störungen und das "Aufschaukeln" von Potenzialen.

Bei der in Fig. 4 dargestellten Hilfsschaltung 34 wird nur die negative Halbwelle der Wechselspannung U_{AC} zur Erzeugung einer Steuerspannung U_{ST} für die Ansteuerung der p-Kanal-MOSFETs verwendet.

**Fig. 5** zeigt eine zweistufige Hilfsschaltung 34', mit der sich beide Halbwellen der Wechselspannung nutzen lassen. Die Hilfsschaltung 34' besteht aus zwei der in Fig. 4 dargestellten Hilfsschaltungen 34, die jedoch an zwei unterschiedliche Anschlüsse 106, 108 der Wechselspannungsquelle 11 angeschlossen sind. Da die Kondensatoren 100, 100' parallel geschaltet sind und durch die beiden Hilfsschaltungen beide Halbwellen der Wechselspannung U_{AC} genutzt werden, wird der bei Fig. 4 beschriebene Vorgang durch die doppelt anliegende Frequenz verdoppelt. Hierdurch wird die Welligkeit am Anschluss U_{ST} verringert und mehr elektrische Ladung erzeugt. Aus diesem Grund wird hier die Differenzspannung U_{Δ} gleichmäßiger, d.h. die Steuerspannung U_{ST} wird bei der Schaltung 34' noch gleichmäßiger der Betriebsspannung U_{B} nachgeführt als bei der Schaltung 34 der Fig. 4.

In Fig. 5 werden die Bauelemente des oberen Teils der Schaltung mit denselben Bezugszeichen bezeichnet wie in Fig. 4, und die Bauelemente des unteren Teils ebenfalls mit diesen Bezugszeichen, aber mit einem nachgestellten Apostroph, z.B. 100' statt 100. Der Serienkondensator 104 ist an den Anschluss 106 der Wechselspannungsquelle 11 angeschlossen, der Serienkondensator 104' an den Anschluss 108.

**Fig. 7** zeigt ein Oszillogramm der Spannung U_{B} am Zwischenkreis 30, und der Spannung U_{ST} zur Steuerung der oberen MOSFETs 50 der Brückenschaltung. Fig. 7 zeigt diese Spannungen für den Fall, dass der Motor im Leerlauf ist, weshalb die Spannungen eine niedrige Welligkeit haben. Die Netzspannung U_{AC} wurde hier nicht dargestellt. Hierzu wird auf Fig. 3 verwiesen.

Die Spannung U_{B} hat hier einen Effektivwert von 272,2 V und einen peak to peak-Wert von 34 V. Die Spannung U_{ST} hat einen Effektivwert von 254 V. Da der Unterschied zwischen den Spannungen nur 18 V beträgt, ist er in Fig. 7 nicht erkennbar.

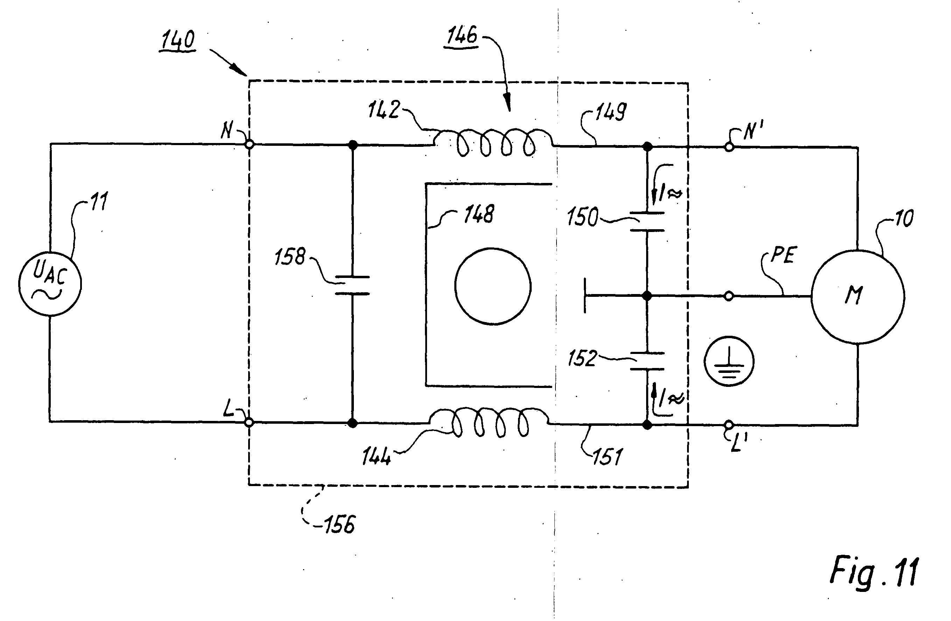

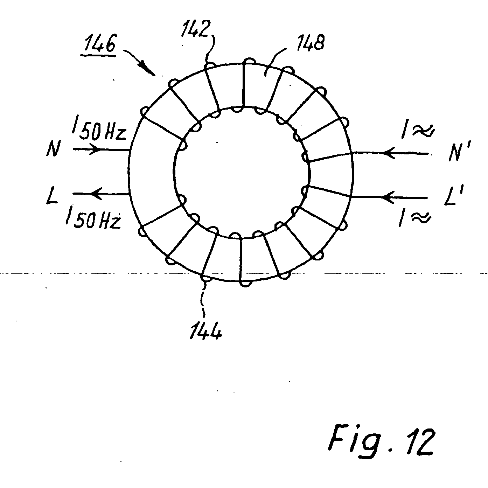

**Fig. 8** zeigt ein Oszillogramm mit einer größeren Verstärkung, etwa entsprechend dem Ausschnitt A der Fig. 7. Hier erkennt man, dass zwischen U_{B} und U_{ST} eine konstante Spannungsdifferenz vorhanden ist, die hier 18 V beträgt. Die Spikes sind eine Folge der Kommutierungsvorgänge und werden durch das bei Fig. 11 und 12 erläuterte Störschutzfilter ausgefiltert, so dass sie nicht in das Wechselspannungsnetz gelangen können.

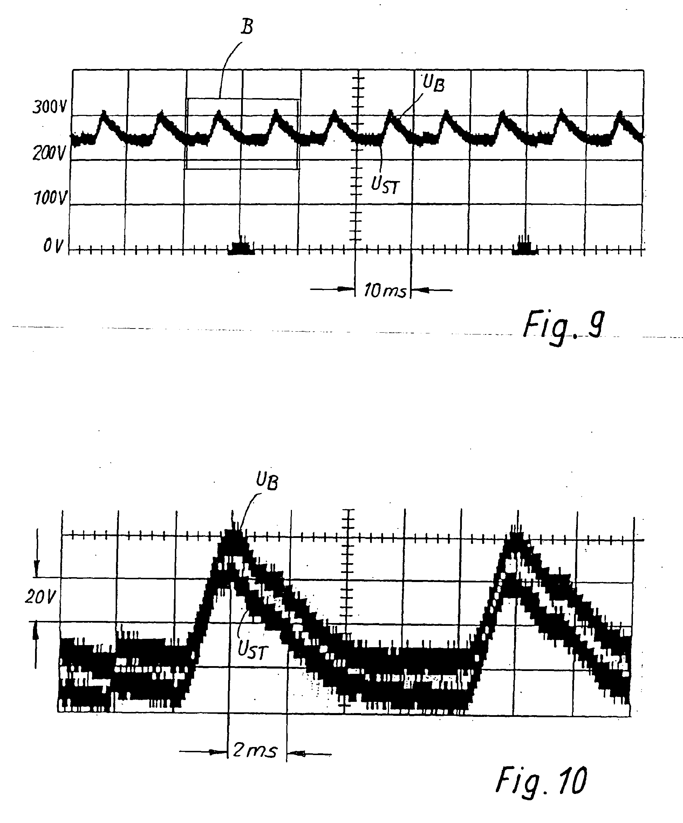

**Fig. 9** zeigt ein Oszillogramm analog Fig. 7, aber bei belastetem Motor, weshalb die Welligkeit der Spannungen U_{B} und U_{ST} größer ist. Die Spannung U_{B} hat hier einen Effektivwert von 267,1 V und einen peak to peak-Wert von 78 V, also eine im Vergleich zu Fig. 8 doppelt so große Welligkeit.

**Fig. 10** zeigt wiederum, analog zu Fig. 8, die konstante Spannungsdifferenz von 18 V zwischen U_{B} und U_{ST}.

**Fig. 11** zeigt ein Schaltbild einer bevorzugten Ausführungsform eines Störschutzfilters 140, wie es zum Anschluss eines erfindungsgemäßen Motors 10 an ein Wechselstromnetz 11 verwendet wird, um die Übertragung von Störungen vom Motor 10 auf das Wechselstromnetz 11 so weit zu unterdrücken, dass der Grenzwert der Norm EN 55014 (für das Hausgerätenetz) eingehalten werden kann.

Ein solches Filter kann z.B. in die dreiadrige Zuleitung des Motors 10 eingeschaltet werden. Der eine Anschluss des Wechselstromnetzes ist wie üblich mit N (Nullleiter) bezeichnet, der andere mit L, und zudem ist ein Masseanschluss vorgesehen, der mit PE bezeichnet ist. Die Anschlüsse des Motors 10 sind mit N' und L' bezeichnet.

In der Leitung N liegt eine Induktivität 142, in der Leitung L eine Induktivität 144. Diese Induktivitäten sind gemäß **Fig. 12** Teile einer sogenannten stromkompensierten Drossel 146, deren Wicklungen so auf einem Ringkern 148 angeordnet sind, dass der Betriebsstrom, z.B. mit 50 oder 60 Hz, kein Magnetfeld im Ringkern 148 hervorruft.

Die Motorseite 149 der Induktivität 142 ist über einen Ableitkondensator 150 mit PE verbunden, die Motorseite 151 der Induktivität 144 über einen Ableitkondensator 152. Das gesamte Störschutzfilter 140 ist in einem Metallgehäuse 156 gekapselt, das mit Masse PE verbunden ist. Auf der Netzseite der Induktivitäten 142, 144 ist ein Kondensator 158 vorgesehen.

### Wirkungsweise von Fig. 11 und 12

Der Motor 10 wirkt wie eine Stromquelle für hochfrequente Ableitströme I_{≈}, welche über die Kondensatoren 150, 152 als Ableitstrom la nach Masse PE fließen. la hat typisch eine Größenordnung von kleiner als 0,5 mA. Da an die Kondensatoren 150, 152 besonders hohe Sicherheits-Anforderungen gestellt werden, verwendet man für sie bevorzugt sogenannte Y-Kondensatoren.

### Bevorzugte Werte in Fig. 11 und 12

| | |
|---|---|
| Drossel (Induktivität) 142 | ... 1,5 mH |
| Drossel (Induktivität) 144 | ... 1,5 mH |
| Die Drosseln 142, 144 sind auf einen Ringkern 148 gewickelt, wie in Fig. 12 dargestellt. | |
| Kondensatoren 150, 152 | ... 2,2 nF (Y-Kondensatoren) |
| Kondensator 158 | ... 730 nF, 400 V. |

Geschlossenes Metallgehäuse 156, im Betrieb geerdet.

Ein solches Filter 140 kann z.B. in das Netzkabel des Motors 10 integriert werden, oder in dessen Kaltgerätestecker, oder in die Leiterplatte des Motors, oder in eine separate Leiterplatte, und es ermöglicht in einfacher Weise die Einhaltung der Norm EN 55014 für das Hausgerätenetz, um z.B. Störungen des Fernsehempfangs über das Leitungsnetz im Haushalt zu verhindern.

## Patentansprüche

1. Elektronisch kommutierter Motor, der zur Speisung aus einer Wechselspannungsquelle (11) ausgebildet ist und der aufweist:
a) einen Stator mit wenigstens einer Wicklungsphase (L1, L2, ..., Ln);
b) einen mit diesem Stator in magnetischer Wechselwirkung stehenden Rotor (ROT);
c) einen Gleichrichter (82), der dazu dient, aus einer Wechselspannung (U_{AC}) an der Wechselspannungsquelle (11) eine pulsierende Gleichspannung (U_{B}) zwischen einer positiven Leitung (30) und einer negativen Leitung (32) eines Gleichstrom-Zwischenkreises (15) zu erzeugen; und
d) eine an den Gleichstrom-Zwischenkreis (15) angeschlossene und zur Stromversorgung der wenigstens einen Wicklungsphase dienende Brückenschaltung (14 ; 28A, 28B, 28C) die ein Schaltelement (50, 52) aufweist, das mit einer Steuerspannung (U_{ST}) schaltbar ist, die kleiner ist als die zu schaltende Spannung (U_{B}); **gekennzeichnet durch**
e) eine Hilfsschaltung (34, 34'), die aus der pulsierenden Gleichspannung (U_{B}) am Gleichstrom-Zwischenkreis (15) und aus der Wechselspannung (U_{AC}) eine gegenüber der pulsierenden Gleichspannung (U_{B}) um eine vorgegebene Differenzspannung (U_{Δ}) kleinere und der pulsierenden Gleichspannung nachgeführte Steuerspannung (U_{ST}) für das Schalten des Schaltelements (FET1) erzeugt.

2. Motor nach Anspruch 1, bei welchem das Schaltelement ein p-Kanal-MOSFET (FET1) ist, dessen Source-Elektrode (S) mit der positiven Leitung (30) des Gleichstrom-Zwischenkreises (15) verbunden ist und auf dessen Gate-Elektrode (G) die Steuerspannung (U_{ST}) zum Einschalten des p-Kanal-MOSFET aufschaltbar ist.

3. Motor nach Anspruch 1 oder 2, bei welchem die Hilfsschaltung (34; 34') einen zur Erzeugung der Steuerspannung (U_{ST}) dienenden Kondensator (100) aufweist, der in Reihe mit einer Diode (102) zwischen die positive Leitung (30) des Gleichstrom-Zwischenkreises und einen der beiden Anschlüsse (106) einer Quelle (11) für die Wechselspannung (U_{AC}) geschaltet ist, wobei bevorzugt parallel zu dem Kondensator (100) ein Spannungsbegrenzer (108) geschaltet ist, welcher die Spannung am Kondensator (100) auf eine vorgegebene Differenzspannung (U_{Δ}) begrenzt.

4. Motor nach Anspruch 3, bei welchem der Spannungsbegrenzer eine Zenerdiode (108) ist.

5. Motor nach Anspruch 3 oder 4, bei welchem parallel zu dem Kondensator (100) ein Widerstand (110) vorgesehen ist, um Ladungsoszillationen am Kondensator (100) bzw. Potenzialspitzen und Störungen durch EMV-Einstrahlungen zu reduzieren oder zu verhindern.

6. Motor nach einem der Ansprüche 3 bis 5, bei welchem zur Strombegrenzung in Reihe mit dem Kondensator (100) und der Wechselspannungsquelle (11) ein weiterer Kondensator (104) geschaltet ist.

7. Motor nach einem der Ansprüche 3 bis 6, bei welchem die Hilfsschaltung (34') aufweist:
Einen zweiten Kondensator (100') zur Erzeugung der Steuerspannung, der zwischen die positive Leitung (30) des Gleichstrom-Zwischenkreises (15) und den anderen Anschluss (108) der Wechselspannungsquelle (11) geschaltet ist,
und eine zwischen den zweiten Kondensator (100') und den anderen Anschluss (108) der Wechselspannungsquelle (11) geschaltete zweite Diode (102').

8. Motor nach einem der vorhergehenden Ansprüche, bei welchem zur Ansteuerung des Schaltelements (50) Steuerelemente (60, 62) vorgesehen sind, welche von einer Kommutierungslogik (20) des Elektromotors (10) ansteuerbar sind.

9. Motor nach Anspruch 8, bei welchem die Steuerelemente als Bipolartransistoren (60, 62) ausgebildet sind, und die Basen dieser Bipolartransistoren über einen Widerstand (70) mit der positiven Leitung (30) des Gleichstrom-Zwischenkreises verbunden sind, wobei der Strom durch den Widerstand (70) durch eine von der Kommutierungslogik (20) ansteuerbare Konstantstromquelle (36) bestimmt ist.

10. Motor nach Anspruch 9, bei welchem die Konstantstromquelle (36) einen als Konstantstromquelle geschalteten spannungsfesten Transistor (66) aufweist, dessen Kollektor mit dem Widerstand (70) und dessen Basis mit der Kommutierungslogik (20) verbunden ist.

11. Elektronisch kommutierter Motor, welcher zur Speisung aus einem Wechselspannungsnetz (11) ausgebildet ist und einen Gleichrichter (82) zur Gleichrichtung dieser Wechselspannung (U_{AC}) aufweist, um zwischen einer positiven Leitung (30) und einer negativen Leitung (32) eines Gleichstrom-Zwischenkreises eine pulsierende Gleichspannung (U_{B}) und damit ein pulsierendes positives Potenzial an dieser positiven Leitung (30) zu erzeugen, welcher Motor aufweist:
Einen permanentmagnetischen Rotor (18); und
einen Stator mit mindestens einer Wicklungsphase (L1, L2, ...);
eine Brückenschaltung (14) zum Anschluss an den Zwischenkreis (30, 32) und zur Stromversorgung der mindestens einen Wicklungsphase (L1,L2,...), welche Brückenschaltung (14) auf ihrer mit der negativen Leitung (32) verbundenen Seite n-Kanal-MOSFETs (52) und auf ihrer mit der positiven Leitung (30) verbundenen Seite p-Kanal-MOSFETs (50) aufweist; **gekennzeichnet durch**
eine Schaltung (34) zur Erzeugung einer gegenüber dem pulsierenden positiven Potenzial an der positiven Leitung (30) des Zwischenkreises ständig negativeren, ebenfalls pulsierenden Hilfsspannung (U _{ST}), welche einen p-Kanal-MOSFET (50) der Brückenschaltung (14) leitend steuert, wenn sie an dessen Gate angeschlossen wird.

12. Motor nach Anspruch 11, bei welchem die Hilfsspannung (U_{ST}) an einem Kondensator (100) erzeugt wird, dessen eine Elektrode (E2) im wesentlichen das Potenzial der positiven Leitung (30) des Zwischenkreises hat, wobei bevorzugt parallel zu diesem Kondensator (100) eine Zenerdiode (108) geschaltet ist, um die Spannung am Kondensator (100) auf eine vorgegebene Differenzspannung (U_{Δ}) zu begrenzen.

13. Motor nach Anspruch 11 oder 12, bei welchem parallel zum Kondensator (100) ein Widerstand (110) vorgesehen ist, um Ladungsoszillationen am Kondensator (100) und Spannungsspitzen sowie Störungen durch EMV-Einstrahlung zu reduzieren oder zu verhindern.

14. Motor nach Anspruch 12 oder 13, bei welchem zur Strombegrenzung in Reihe mit dem Kondensator (100) und der Wechselspannungsquelle (11) ein weiterer Kondensator (104) geschaltet ist.

15. Motor nach einem der Ansprüche 11 bis 14, bei welchem die Hilfsschaltung (34') aufweist:
Einen zweiten Kondensator (100') zur Erzeugung der Steuerspannung, der zwischen die positive Leitung (30) des Gleichstrom-Zwischenkreises (15) und den anderen Anschluss (108) der Wechselspannungsquelle (11) geschaltet ist,
und eine zwischen den zweiten Kondensator (100') und den anderen Anschluss (108) der Wechselspannungsquelle (11) geschaltete zweite Diode (102').

16. Motor nach einem der Ansprüche 11 bis 15, bei welchem zur Ansteuerung des p-Kanal-MOSFETs (50) Bipolartransistoren (60, 62) vorgesehen sind, welche von einer Kommutierungslogik (20) des Elektromotors (10) ansteuerbar sind.

17. Motor nach Anspruch 16, bei welchem die Basen der Bipolartransistoren (60, 62) über einen Widerstand (70) mit der positiven Leitung (30) des Gleichstrom-Zwischenkreises verbunden sind, wobei der Strom durch den Widerstand (70) durch eine durch die Kommutierungslogik (20) ansteuerbare Konstantstromquelle (36) bestimmt ist, welche bevorzugt einen als Konstantstromquelle geschalteten spannungsfesten Transistor (66) aufweist, dessen Kollektor mit dem Widerstand (70) und dessen Basis mit der Kommutierungslogik (20) verbunden ist.

18. Motor nach einem der vorhergehenden Ansprüche, in dessen Zuleitung ein Störschutzfilter (140) mit einer stromkompensierten Drossel (146) angeordnet ist.

19. Motor nach Anspruch 18, bei welchem bei einem an einem einphasigen Wechselstromnetz (L, N) betriebenen Motor (10) zwischen Masse (PE) und den beiden von der stromkompensierten Drossel (146) zum Motor (10) führenden Anschlüssen (149, 151) jeweils ein Ableitkondensator (150, 152) für hochfrequente Störungen vorgesehen ist, welche Ableitkondensatoren (150, 152) bevorzugt als Y-Kondensatoren ausgebildet sind.

20. Motor nach Anspruch 18 oder 19, bei welchem auf der zum Anschluss an das Wechselstromnetz vorgesehenen Seite des Störschutzfilters (140) ein Kondensator (158) zwischen den beiden Anschlussleitungen (N, L) vorgesehen ist, welcher mindestens um den Faktor 50 größer ist als ein Ableitkondensator (150, 152).

## Claims

1. Electronically commutated motor which is designed to be fed from an alternating current voltage source (11) and comprises:
a) a stator with at least one winding phase (L1, L2, ..., Ln) ;
b) a rotor (ROT) which interacts magnetically with this stator;
c) a rectifier (82) which is used to produce a pulsating direct current voltage (U_{B}) between a positive lead (30) and a negative lead (32) of a direct current intermediate circuit (15) from an alternating current voltage (U_{AC}) at the alternating current voltage source (11); and
d) a bridge circuit (14; 28A, 28B, 28C) which is connected to the direct current intermediate circuit (15) and serves to supply the current to the at least one winding phase and which comprises a switching element (50, 52) which can be switched with a control voltage (U_{ST}) which is smaller than the voltage (U_{B}) to be switched;
**characterised by**
e) an auxiliary circuit (34, 34') which from the pulsating direct current voltage (U_{B}) at the direct current intermediate circuit (15) and from the alternating current voltage (U_{AC}) produces a control voltage (U_{ST}) for switching the switching element (FET1) which is smaller than the pulsating direct current voltage (U_{B}) by a predetermined voltage difference (U_{Δ}) and tracks the pulsating direct current voltage.

2. Motor according to claim 1, in which the switching element is a p-channel MOSFET (FET1) whose source electrode (S) is connected to the positive lead (30) of the direct current intermediate circuit (15) and to whose gate electrode (G) the control voltage (U_{ST}) can be switched to switch on the p-channel MOSFET.

3. Motor according to claim 1 or 2, in which the auxiliary circuit (34; 34') comprises a capacitor (100) which is used to produce the control voltage (U_{ST}) and is connected in series with a diode (102) between the positive lead (30) of the direct current intermediate circuit and one of the two connections (106) of a source (11) for the alternating current voltage (U_{AC}), preferably with a voltage limiting arrangement (108) which is connected parallel to the capacitor (100) and limits the voltage at the capacitor (100) to a predetermined voltage difference (U_{Δ}).

4. Motor according to claim 3, in which the voltage limiting arrangement is a zener diode (108).

5. Motor according to claim 3 or 4, in which a resistor (110) is provided parallel to the capacitor (100) in order to reduce or prevent oscillations in the charge at the capacitor (100) or potential peaks and interference through EMC radiation.

6. Motor according to one of claims 3 to 5, in which a further capacitor (104) is connected in series with the capacitor (100) and the alternating current voltage source (11) to limit the current.

7. Motor according to one of claims 3 to 6, in which the auxiliary circuit (34') comprises:
a second capacitor (100') for producing the control voltage and which is connected between the positive lead (30) of the direct current intermediate circuit (15) and the other connection (108) of the alternating current voltage source (11),
and a second diode (102') which is connected between the second capacitor (100') and the other connection (108) of the alternating current voltage source (11).

8. Motor according to one of the preceding claims, in which for actuation of the switching element (50) control elements (60, 62) are provided which can be actuated by a commutation logic (20) of the electric motor (10).

9. Motor according to claim 8, in which the control elements are embodied as bipolar transistors (60, 62), and the bases of these bipolar transistors are connected through a resistor (70) to the positive lead (30) of the direct current intermediate circuit, the current through the resistor (70) being determined by a constant current source (36) which can be actuated by the commutation logic (20).

10. Motor according to claim 9, in which the constant current source (36) comprises a voltage-stable transistor (66) which is connected as a constant current source and the collector of which is connected to the resistor (70) and the base of which is connected to the commutation logic (20).

11. Electronically commutated motor which is designed to be fed from an alternating current voltage source (11) and comprises a rectifier (82) for rectifying this alternating current voltage (U_{AC}) in order to produce a pulsating direct current voltage (U_{B}) between a positive lead (30) and a negative lead (32) of a direct current intermediate circuit and hence a pulsating positive potential at this positive lead (30), which motor comprises:
a permanent magnet rotor (18); and
a stator with at least one winding phase (L1, L2, ...);
a bridge circuit (14) for connection to the intermediate circuit (30, 32) and for supplying current to the at least one winding phase (L1, L2, ...), which bridge circuit (14) comprises n-channel MOSFETs (52) on its side connected to the negative lead (32) and p-channel MOSFETs (50) on its side connected to the positive lead (30);
**characterised by** a circuit (34) for producing an auxiliary voltage (U_{ST}) which is continuously more negative than the pulsating positive potential at the positive lead (30) of the intermediate circuit and also pulsates and which turns on a p-channel MOSFET (50) of the bridge circuit (14) when it is connected to its gate.

12. Motor according to claim 11, in which the auxiliary voltage (U_{ST}) is produced at a capacitor (100) one electrode (E2) of which essentially has the potential of the positive lead (30) of the intermediate circuit, with a zener diode (108) which is preferably connected parallel to this capacitor (100) in order to limit the voltage at the capacitor (100) to a predetermined voltage difference (U_{Δ}).

13. Motor according to claim 11 or 12, in which a resistor (110) is provided parallel to the capacitor (100) in order to reduce or to prevent oscillations in the charge at the capacitor (100) and voltage spikes and interference due to EMC radiation.

14. Motor according to claim 12 or 13, in which a further capacitor (104) is connected in series with the capacitor (100) and the alternating current voltage source (11) to limit the current.

15. Motor according to one of claims 11 to 14, in which the auxiliary circuit (34') comprises:
a second capacitor (100') for producing the control voltage and which is connected between the positive lead (30) of the direct current intermediate circuit (15) and the other connection (108) of the alternating current voltage source (11),
and a second diode (102') which is connected between the second capacitor (100') and the other connection (108) of the alternating current voltage source (11).

16. Motor according to one of claims 11 to 15, in which for actuation of the p-channel MOSFETs (50) bipolar transistors (60, 62) are provided which can be actuated by a commutation logic (20) of the electric motor (10).

17. Motor according to claim 16, in which the bases of the bipolar transistors (60, 62) are connected through a resistor (70) to the positive lead (30) of the direct current intermediate circuit, the current through the resistor (70) being determined by a constant current source (36) which can be actuated by the commutation logic (20) and preferably comprises a voltage-stable transistor (66) which is connected as a constant current source and the collector of which is connected to the resistor (70) and the base of which is connected to the commutation logic (20) .

18. Motor according to one of the preceding claims, the lead of which incorporates an interference protection filter (140) with a current-compensated reactance (146).

19. Motor according to claim 18, in which in the case of a motor (10) operated on a single-phase alternating current power supply (L, N) a bypass capacitor (150, 152) for high-frequency interference is provided in each case between ground (PE) and the two connections (149, 151) leading from the current-compensated reactance (146) to the motor (10), which bypass capacitors (150, 152) are preferably embodied as Y-capacitors.

20. Motor according to claim 18 or 19, in which on the side of the interference protection filter (140) provided for connection to the alternating current power supply there is a capacitor (158) between the two connecting leads (N, L) which is greater than a bypass capacitor (150, 152) at least by the factor 50.

## Revendications

1. Moteur à commutation électronique qui est conçu pour être alimenté à partir d'une source de tension alternative (11) et qui présente :
a) un stator avec au moins une phase d'enroulement (L1, L2, ..., Ln) ;
b) un rotor (ROT) en interaction magnétique avec ce stator ;
c) un redresseur (82) qui sert à générer à partir d'une tension alternative (U_{AC}) à la source de tension alternative (11) une tension continue pulsée (U_{B}) entre une ligne positive (30) et une ligne négative (32) d'un circuit intermédiaire à courant continu (15) ; et
d) un circuit en pont (14 ; 28A, 28B, 28C) connecté au circuit intermédiaire à courant continu (15) et servant à l'alimentation électrique de ladite au moins une phase d'enroulement, qui présente un élément de commutation (50, 52) qui est commutable par une tension de commande (U_{ST}) qui est inférieure à la tension à commuter (U_{B}) ;
**caractérisé par**
e) un circuit auxiliaire (34, 34') qui génère à partir de la tension continue pulsée (U_{B}) au circuit intermédiaire à courant continu (15) et à partir de la tension alternative (U_{AC}) une tension de commande (U_{ST}) inférieure d'une tension différentielle prédéfinie (U_{Δ}) par rapport à la tension continue pulsée (U_{B}) et asservie à la tension continue pulsée pour la commutation de l'élément de commutation (FET1).

2. Moteur selon la revendication 1, dans lequel l'élément de commutation est un MOSFET à canal P (FET1) dont l'électrode de source (S) est reliée à la ligne positive (30) du circuit intermédiaire à courant continu (15) et sur l'électrode de grille (G) duquel la tension de commande (U_{ST}) peut être appliquée pour activer le MOSFET à canal P.

3. Moteur selon la revendication 1 ou 2, dans lequel le circuit auxiliaire (34 ; 34') présente un condensateur (100) servant à générer la tension de commande (U_{ST}), qui est connecté en série avec une diode (102) entre la ligne positive (30) du circuit intermédiaire à courant continu et une des deux connexions (106) d'une source (11) pour la tension alternative (U_{AC}), un limiteur de tension (108) qui limite la tension au condensateur (100) à une tension différentielle prédéfinie (U_{Δ}) étant de préférence connecté en parallèle sur le condensateur (100).

4. Moteur selon la revendication 3, dans lequel le limiteur de tension est une diode Zener (108).

5. Moteur selon la revendication 3 ou 4, dans lequel une résistance (110) est prévue en parallèle sur le condensateur (100) pour réduire ou empêcher les oscillations de charge sur le condensateur (100) ou les pointes de potentiel et les perturbations par rayonnement CEM.

6. Moteur selon l'une des revendications 3 à 5, dans lequel un autre condensateur (104) est connecté en série avec le condensateur (100) et la source de tension alternative (11) pour limiter le courant.

7. Moteur selon l'une des revendications 3 à 6, dans lequel le circuit auxiliaire (34') présente :
un deuxième condensateur (100') servant à générer la tension de commande, qui est connecté entre la ligne positive (30) du circuit intermédiaire à courant continu (15) et l'autre connexion (108) de la source de tension alternative (11),
et une deuxième diode (102') connectée entre le deuxième condensateur (100') et l'autre connexion (108) de la source de tension alternative (11).

8. Moteur selon l'une des revendications précédentes, dans lequel il est prévu pour l'activation de l'élément de commutation (50) des éléments de commande (60, 62) qui sont activables par une logique de commutation (20) du moteur électrique (10).

9. Moteur selon la revendication 8, dans lequel les éléments de commande sont réalisés sous la forme de transistors bipolaires (60, 62) et les bases de ces transistors bipolaires sont reliées par une résistance (70) à la ligne positive (30) du circuit intermédiaire à courant continu, le courant à travers la résistance (70) étant déterminé par une source de courant constant (36) activable par la logique de commutation (20).

10. Moteur selon la revendication 9, dans lequel la source de courant constant (36) présente un transistor (66) à tension fixe connecté en source de courant constant, dont le collecteur est relié à la résistance (70) et la base à la logique de commutation (20).

11. Moteur à commutation électronique qui est conçu pour être alimenté à partir d'un réseau à tension alternative (11) et présente un redresseur (82) servant à redresser cette tension alternative (U_{AC}) pour générer entre une ligne positive (30) et une ligne négative (32) d'un circuit intermédiaire à courant continu une tension continue pulsée (U_{B}) et donc un potentiel positif pulsé sur cette ligne positive (30), lequel moteur présente :
un rotor à aimant permanent (18) ; et
un stator avec au moins une phase d'enroulement (L1, L2, ...) ;
un circuit en pont (14) destiné à être connecté au circuit intermédiaire (30, 32) et servant à l'alimentation électrique de ladite au moins une phase d'enroulement (L1, L2, ...), lequel circuit en pont (14) présente des MOSFET à canal N (52) de son côté relié à la ligne négative (32) et des MOSFET à canal P (50) de son côté relié à la ligne positive (30) ;
**caractérisé par** un circuit (34) servant à générer une tension auxiliaire (U_{ST}) également pulsée, constamment plus négative que le potentiel positif pulsé sur la ligne positive (30) du circuit intermédiaire, laquelle rend conducteur un MOSFET à canal P (50) du circuit en pont (14) quand elle est connectée à sa grille.

12. Moteur selon la revendication 11, dans lequel la tension auxiliaire (U_{ST}) est générée à un condensateur (100) dont une électrode (E2) est essentiellement au potentiel de la ligne positive (30) du circuit intermédiaire, une diode Zener (108) étant de préférence connectée en parallèle sur ce condensateur (100) pour limiter la tension au condensateur (100) à une tension différentielle prédéfinie (U_{Δ}).

13. Moteur selon la revendication 11 ou 12, dans lequel une résistance (110) est prévue en parallèle sur le condensateur (100) pour réduire ou empêcher les oscillations de charge sur le condensateur (100) ou les pointes de tension ainsi que les perturbations par rayonnement CEM.

14. Moteur selon la revendication 12 ou 13, dans lequel un autre condensateur (104) est connecté en série avec le condensateur (100) et la source de tension alternative (11) pour limiter le courant.

15. Moteur selon l'une des revendications 11 à 14, dans lequel le circuit auxiliaire (34') présente :
un deuxième condensateur (100') servant à générer la tension de commande, qui est connecté entre la ligne positive (30) du circuit intermédiaire à courant continu (15) et l'autre connexion (108) de la source de tension alternative (11),
et une deuxième diode (102') connectée entre le deuxième condensateur (100') et l'autre connexion (108) de la source de tension alternative (11).

16. Moteur selon l'une des revendications 11 à 15, dans lequel il est prévu pour l'activation du MOSFET à canal P (50) des transistors bipolaires (60, 62) qui sont activables par une logique de commutation (20) du moteur électrique (10).

17. Moteur selon la revendication 16, dans lequel les bases des transistors bipolaires (60, 62) sont reliées par une résistance (70) à la ligne positive (30) du circuit intermédiaire à courant continu, le courant à travers la résistance (70) étant déterminé par une source de courant constant (36) activable par la logique de commutation (20) qui présente de préférence un transistor (66) à tension fixe connecté en source de courant constant, dont le collecteur est relié à la résistance (70) et la base à la logique de commutation (20).

18. Moteur selon l'une des revendications précédentes, dans la ligne d'alimentation duquel est disposé un filtre antiparasites (140) comprenant une bobine de self compensée en courant (146).

19. Moteur selon la revendication 18, dans lequel, dans le cas d'un moteur (10) fonctionnant sur un réseau à courant alternatif monophasé (L, N), il est prévu entre la masse (PE) et chacune des deux connexions (149, 151) conduisant de la bobine de self compensée en courant (146) au moteur (10) un condensateur de fuite (150, 152) pour les perturbations à haute fréquence, lesquels condensateurs de fuite (150, 152) sont de préférence réalisés sous la forme de condensateurs Y.

20. Moteur selon la revendication 18 ou 19, dans lequel il est prévu du côté du filtre antiparasites (140) prévu pour être connecté au réseau à courant alternatif un condensateur (158) entre les deux lignes de raccordement (N, L), lequel est plus grand au moins d'un facteur 50 qu'un condensateur de fuite (150, 152).
